# EUROPEAN PATENT SPECIFICATION

(11) **EP 0 475 996 B1**
(45) Date of publication and mention of the grant of the patent: **31.08.1994**
(21) Application number: 90908700.9
(22) Date of filing: 05.06.1990
(51) Int. Cl.: B63B 17/02

(54) **MOUNTING KNOB FOR CANOPY, TARPAULIN OR THE LIKE**
BEFESTIGUNGSKNOPFANORDNUNG FÜR VERDECK ODER ÄHNLICHE ABDECKUNGEN
BOUTON DE FIXATION POUR CAPOTE, BACHE OU SIMILAIRE

(30) Priority: 02.06.1989 NO 892245
(43) Date of publication of application: 25.03.1992
(73) Proprietor: OLSEN, Hugo Cato, 5030 Landäs (NO)
(72) Inventor: OLSEN, Hugo Cato, 5030 Landäs (NO)
(74) Representative: Bjerre, Nils B.J.
(86) International application number: NO9000100
(87) International publication number: WO9014983

(56) References cited:
- NO-A- 66 411
- US-A- 3 283 383
- US-A- 4 305 171

## Description

The present invention relates to an one piece mounting knob for canopy, tarpaulin, or the like, comprising an oblong head fixed on a shaft.

In order to fasten the canopy on a small boat it is usual to provide the edge of the canopy with apertures or holes which are threaded down a mounting knob which is fastened on the boat and which above has an enlarged portion with a dimension which results in the canopy having to be pressed down said portion with a tight fit. As long as the canopy is relatively new and as long as the stress from the wind is not especially strong such a mounting knob, which can be designated as a torsion body, holds the canopy in place. But when the canopy has been in use for a period and a particular force is no longer needed to thread it into place on the mounting knob, there will be significant danger of the canopy loosening in adverse winds.

A series of attempts have been made to solve the problem. Thus mounting knobs are known where a part, which is moveable relative to the remainder of the knob, holds the canopy in place and prevents this from loosening from the mounting knob. A mounting knob of the type is known from US-A-4 305 171 Mounting knobs of said type are however relatively complicated to produce, and moreover after a shorter or longer period of use in an environment with salt water, which can cause salt deposits, there will usually be problems with the movement of said part and in addition corrosion. The part can also become immovable by virtue of it freezing solid. Such mounting knobs have therefore not achieved particular success in the market, in spite of the need which exists for functionally reliable mounting knobs.

The object of the present invention is to produce a mounting knob which functions in a reliable manner also after use of the canopy over a longer period of time, and which is of simple construction and thereby reasonable to produce.

This is achieved according to the invention in that the head has a portion which projects further out from the shaft, substantially at right angles to this, than the opposite portion of the head, and in that the portion is deflected downwardly towards the foot of the knob.

The mounting knob can be of metal or hard plastic and is usually produced by casting.

The mounting knob will usually be fixed to the foundation, such as a boat, by means of a screw which is placed in a through bore along the axis of the mounting knob, while the fastening knob can also be placed in a rail, which in its turn is fastened to the foundation.

The mounting knob according to the invention provides in spite of its simple design much more reliable anchoring of canopies and the like. After a canopy is threaded onto the mounting knob, something which is a simple operation which is not prevented by the elongated head portion, it is held in place even in powerful winds and even if the canopy has been in use for a long time so that the hole which is threaded onto the mounting knob, is enlarged relative to its original size.

The invention will be further explained in the following description of a preferred embodiment of the mounting knob according to the invention having regard to the accompanying drawing, where:
Fig. 1 shows a side view of the mounting knob.
Fig. 2 shows a plan view of the mounting knob of Fig. 1.
Fig. 3 shows a side view of the mounting knob arranged on a foundation and with a canopy or the like in place.

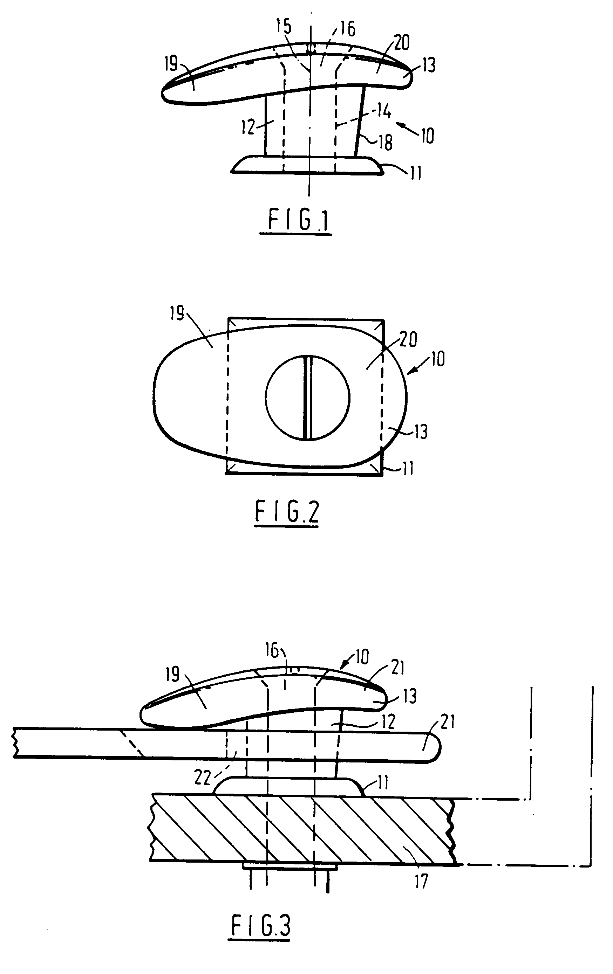

Fig. 1 shows a side view of a mounting knob 10. This consists of a foot 11 with which it is placed on a foundation (17 in Fig. 3), and from which there projects upwardly a shaft 12 which above becomes a head 13. The mounting knob 10 is designed with a through bore 14 along its longitudinal axis 15. In the bore 14 a screw 16 is placed for fastening the mounting knob to the foundation 17, as is shown in Fig. 3. It is evident that the foot 11 is wider than the shaft 12. Thereby a larger abutment surface is obtained against the foundation and consequently greater stability of the mounting knob. The shaft 12 is essentially cylindrical, but along the one "side" 18 (the right in Fig. 1 and 3) is narrowing off towards the foot 11 for a reason which will be further explained below.

The head 13 is oblong with an oval-like shape. However it is non-symmetrical relative to the shaft 12, a portion 19 (the left in the Figures), projecting further out from the shaft than the opposite portion 20. In the illustrated embodiment the portion 19 projects about twice as far outside the shaft 12 as the portion 20 does. The portion 19 is not parallel to the foundation 17, but is curved somewhat downwardly towards this.

In Fig. 3 a canopy 21 is indicated placed on the mounting knob 10. The canopy is placed in that holes 22 at the edge thereof are threaded onto the head portion 19 and round the head portion 20 and down on the shaft 12. If the material of the canopy 21 allows little stretching the hole 22 must be so large that the canopy can be drawn down over the head portion 21, whereby the hole thus becomes more or less larger than the diameter of the shaft 12. But if the material can be stretched the hole 22 does not need to be larger than the diameter of the shaft. The length of the portion 19 is without significance for the size of the hole.

As mentioned above the shaft 12 narrows off along the one "side" downwardly towards the foot 11. This means that the canopy 21 slides easier down towards the foot 11. Also the downward curvature of the head portion enables the canopy to be better held in place at the foundation 17.

The invention is described above in connection with canopies on small boats. However it is clear that the mounting knob according to the invention can be employed in many other locations where it is a question of fastening a canopy or tarpaulin or the like to a foundation, such as for example on car trailers, camping equipment etc.

## Claims

1. One piece-Mounting knob for canopy, tarpaulin or the like, comprising an oblong head (13) fixed on a shaft (12), characterised in that the head (13) has a portion (19) which projects further out from the shaft, substantially at right angles to this, than the opposite portion (20) of the head and in that the portion is deflected downwardly towards the foot of the knob.

2. Mounting knob in accordance with claim 1, characterised in that the shaft (12) is narrowing off towards the foot (11) on the opposite side relative to the elongated head portion (10).

3. Mounting knob in accordance with one of the preceding claims, characterised in that the elongated portion (19) of the head projects two or three times, preferably about twice as far outside the shaft (12) than what the opposite portion (20) does.

4. Mounting knob in accordance with one of the preceding claims, characterised in that the head (13) seen from above has an oval-like form.

## Patentansprüche

1. Einstückiger Befestigungsknopf für ein Verdeck, eine Plane oder dergleichen mit einem an einem Schaft (12) befestigten länglichen Kopf (13), dadurch gekennzeichnet, daß der Kopf (13) eine Partie (19) aufweist, die vom Schaft weiter absteht, insbesondere im rechten Winkel zu diesem, als die entgegengesetzte Partie (20) des Kopfes und daß die Partie (19) nach unten zum Fuß des Knopfes hin geneigt ist.

2. Befestigungsknopf nach Anspruch 1, dadurch gekennzeichnet, daß der Schaft (12) an der Seite, die der verlängerten Kopfpartie (19) gegenüber liegt, zum Fuß (11) hin schmäler wird.

3. Befestigungsknopf nach einem der vorhergehenden Ansprüche, dadurch gekennzeichnet, daß die verlängerte Partie (19) des Kopfes zwei- oder dreimal, vorzugsweise doppelt so weit vom Schaft (12) absteht, wie die entgegengesetzte Partie (20).

4. Befestigungsknopf nach einem der vorhergehenden Ansprüche, dadurch gekennzeichnet, daß der Kopf (13) von oben betrachtet eine einem Oval ähnliche Form hat.

## Revendications

1. Bouton de montage en une seule pièce destiné à une bâche, un taud ou analogue, comprenant une tête allongée (13) fixée sur une tige (12), caractérisé en ce que la tête (13) a une partie (19) qui dépasse à l'extérieur plus loin de la tige, pratiquement en direction perpendiculaire à celle-ci, que la partie opposée (20) de la tête, et en ce que ladite partie est fléchie vers le bas, vers le pied du bouton.

2. Bouton de montage selon la revendication 1, caractérisé en ce que la tige (12) se rétrécit vers le pied (11) du côté opposé à la partie allongée de tête (10).

3. Bouton de montage selon l'une des revendications précédentes, caractérisé en ce que la partie allongée (19) de la tête dépasse à l'extérieur de la tige (12) d'une distance comprise entre deux et trois fois, et de préférence de l'ordre de deux fois, la distance dont dépasse la partie opposée (20).

4. Bouton de montage selon l'une des revendications précédentes, caractérisé en ce que la tête (13), en vue de dessus, a une forme ovale.
